# EUROPÄISCHE PATENTANMELDUNG

(11) **EP 1 764 060 A1**
(43) Veröffentlichungstag der Anmeldung: **21.03.2007**
(21) Anmeldenummer: 06018069.2
(22) Anmeldetag: 30.08.2006
(51) Int. Cl.: A61C 8/00

(54) **Zahnimplantat**

(30) Priorität: 19.09.2005 US 230144
(71) Anmelder: Lippe, Rainer, 34134 Kassel (DE)
(72) Erfinder: Lippe, Rainer, 34134 Kassel (DE)
(74) Vertreter: WALTHER, WALTHER & HINZ Patentanwälte - European Patent Attorneys

(57) **Zusammenfassung**

Gegenstand der Erfindung ist ein in einen menschlichen Kieferknochen endostal einschraubbares Dentalimplantat zur Aufnahme und Fixierung eines Zahnersatzes, mit einem Grundkörper (10), welcher einen Kortikalbereich (13) aufweist, an den sich ein ein Außengewinde (11) aufweisender Gewindebereich (14) anschließt, wobei der Außendurchmesser des Grundkörpers (10) im Kortikalbereich (13) größer oder gleich dem Außendurchmesser des Außengewindes (11) ist. Ein Dentalimplantat zu schaffen, welches unmittelbar nach der Implantation fest im Kieferknochen verankert ist wird dadurch erreicht, das auf dem Grundkörper (10) im Kortikalbereich (13) ein Sinusgewinde (12) vorgesehen ist.

## Beschreibung

Die vorliegende Erfindung betrifft ein Dentalimplantat gemäß dem Oberbegriff des Anspruches 1.

Aus der DE 103 56 920 A1 ist ein Dentalimplantat bekannt, welches sich aus drei Abschnitten zusammensetzt. Dabei ist der oberste Abschnitt als ein zylindrischer Kortikalbereich ausgebildet, an den sich ein mittlerer Bereich und ein distaler Bereich anschließen. In diesem mittleren und distalen Bereich ist ein Außengewinde vorgesehen, welches zumindest im distalen Bereich als Schneidgewinde ausgebildet ist, während dieses Außengewinde im mittleren Bereich auch als Kompressionsgewinde ausgebildet sein kann.

Auf der Oberfläche des Grundkörpers ist im Kortikalbereich extendierend ein Kortikalgewinde aufgebracht, welches eine Gewindetiefe von 0,01 mm bis 0,3 mm, vorzugsweise 0,05 mm aufweist. Dieses mindestens vier Gewindegänge aufweisende Kortikalgewinde ist vorzugsweise als Kompressionsgewinde ausgebildet, kann aber auch als Schneidgewinde ausgebildet werden und erstreckt sich etwa über ein Drittel der Gesamtlänge des Grundkörpers. Ein solches extendierend aufgebrachtes Kortikalgewinde mit einer Gewindetiefe von vorzugsweise 0,05 mm leistet aufgrund seiner geringen Größe nur einen minimalen Beitrag zur Gesamtfestigkeit des Dentalimplantates im Kieferknochen, insbesondere in axialer Richtung, so dass die Hauptlast von dem im spongiosen Kieferknochen befindlichen Außengewinde getragen werden muss. Da es heutzutage angestrebt wird, unmittelbar nach Implantieren des Dentalimplantates einen Abdruck zur Vorbereitung des Zahnersatzes zu tätigen besteht die Gefahr, dass hierbei das Dentalimplantat in unerwünschter Weise weiter in den Kieferknochen hineingedrückt wird, da der spongiöse Kieferknochen im Bereich des Außengewindes noch nicht sehr tragfähig ist.

Davon ausgehend liegt der vorliegenden Erfindung die Aufgabe zu Grunde, ein Dentalimplantat der eingangs genannten Art zu schaffen, welches unmittelbar nach der Implantation fest im Kiefer verankert ist.

Als technische Lösung dieser Aufgabe wird erfindungsgemäß ein Dentalimplantat mit den Merkmalen des Anspruches 1 oder mit den Merkmalen des Anspruches 7 vorgeschlagen. Vorteilhafte Weiterbildungen dieses Dentalimplantates sind den jeweiligen Unteransprüchen zu entnehmen.

Ein nach dieser technischen Lehre ausgebildetes Dentalimplantat hat den Vorteil, dass sich das Sinusgewinde mit seinen symmetrisch und sinusförmig ausgebildeten Flanken beim Einschrauben des Dentalimplantates in den kortikalen Bereich des Kieferknochens einschneidet und somit das Dentalimplantat in axialer Richtung zuverlässig hält, schließlich ist der kortikale Bereich des Kieferknochens so fest, dass ein axiales Verrutschen des Dentalimplantates auch unmittelbar nach der Implantation vermieden wird. Dabei hat es sich als vorteilhaft erwiesen, das Sinusgewinde zwischen 0,4 mm und 0,7 mm, vorzugsweise 0,5 mm über den Grundkörper überstehen zu lassen, damit das Sinusgewinde sich in ausreichender Weise in den Kieferknochen einschneiden kann. Durch das deutliche Überstehen des Sinusgewindes über den Grundkörper wird eine Vergrößerung der Implantatbohrung vermieden.

Bei ersten Versuchen hat sich herausgestellt, dass die gewünschte Wirkung bereits erreicht wird, wenn das Sinusgewinde lediglich zwei Gewindegänge aufweist. Dabei hat es sich als vorteilhaft erwiesen, den obersten Gewindegang zumindest in großen Teilen ohne eine Steigung auszubilden und die fehlende Steigung soll bewirken, dass das Dentalimplantat auch langfristig in dieser Position gehalten wird und nicht durch die später beim Kauen auftretenden Kräfte aufgrund der Hebelwirkungen ihrer Steigung weiter in den Kiefer eingeschraubt wird.

In einer weiteren, bevorzugten Ausführungsform ist das Sinusgewinde etwa 0,5 bis 2 mm, vorzugsweise 1 mm vom oberen Rand des Grundkörpers beabstandet. Hierdurch wird erreicht, dass sich das Sinusgewinde auch vollständig in den kortikalen Kieferknochen einschraubt und nicht nur lose oben aufliegt.

Weitere Vorteile des erfindungsgemäßen Dentalimplantates ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1a: ein teilweise geschnitten dargestellte Seitenansicht einer ersten Ausführungsform eines erfindungsgemäßen Dentalimplantates;
- Fig 1b: einen Querschnitt durch das Sinusgewinde des Dentalimplantates gemäß Fig. 1 in vergrößerter Darstellung;
- Fig. 2: ein teilweise geschnitten dargestellte Seitenansicht einer zweiten Ausführungsform eines erfindungsgemäßen Dentalimplantates;
- Fig. 3: ein teilweise geschnitten dargestellte Seitenansicht einer dritten Ausführungsform eines erfindungsgemäßen Dentalimplantates;
- Fig. 4: ein teilweise geschnitten dargestellte Seitenansicht einer vierten Ausführungsform eines erfindungsgemäßen Dentalimplantates;
- Fig. 5: ein teilweise geschnitten dargestellte Seitenansicht einer fünften Ausführungsform eines erfindungsgemäßen Dentalimplantates;
- Fig. 6: ein teilweise geschnitten dargestellte Seitenansicht einer sechsten Ausführungsform eines erfindungsgemäßen Dentalimplantates.

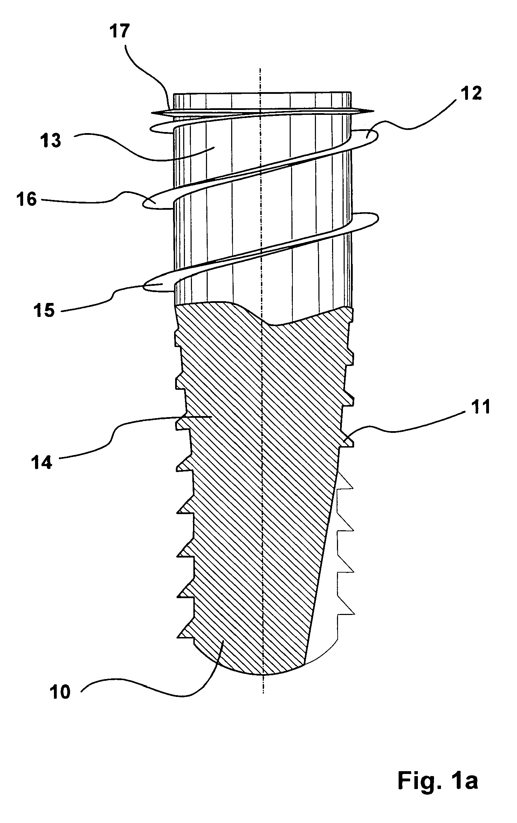

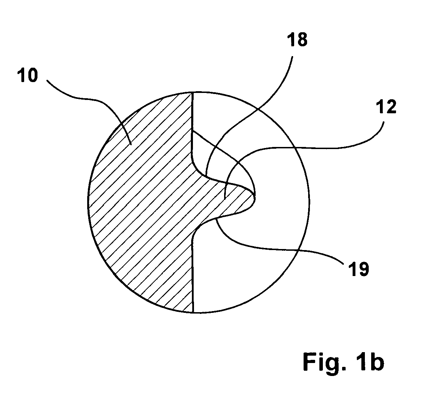

In den Figuren 1a und 1b ist eine erste Ausführungsform eines erfindungsgemäßen Dentalimplantates dargestellt, welches einen Grundkörper 10, ein Außengewinde 11 und ein Sinusgewinde 12 aufweist, wobei das Außengewinde 11 und das Sinusgewinde 12 jeweils außen auf den Grundkörper 10 aufgebracht sind.

Der Grundkörper 10 unterteilt sich in einen Kortikalbereich 13 und einen Gewindebereich 14, wobei der Kortikalbereich 13 im Wesentlichen zylindrisch ausgebildet ist und sich im oberen Bereich des Grundkörpers 10 befindet, so dass dieser Kortikalbereich 13 bei einem fertig implantierten Dentalimplantat in der Kortikalis des Kieferknochens zur Anlage kommt. Dabei nimmt der Kortikalbereich 13 etwa ein Drittel der Länge des Grundkörpers 10 ein, während der Gewindebereich 14 sich über etwa zwei Drittel des Grundkörpers 10 erstreckt.

Im Gewindebereich 14 ist das Außengewinde 11 auf den Grundkörper 10 aufgebracht, wobei das Außengewinde 11 in seinem unteren Bereich als Schneidgewinde und in seinem oberen, an den Kortikalbereich 13 angrenzenden Bereich als Kompressionsgewinde ausgebildet ist. Die einzelnen Gewindegänge des Außengewindes 10 sind dabei so ausgelegt, dass die Außenkontur des Außengewindes 11 eine zylindrische Form annimmt, wobei der äußere Durchmesser des Außengewindes 11 dem äußeren Durchmesser des Kortikalbereichs entspricht. Folglich bildet der Kortikalbereich 13 zusammen mit dem Außengewinde 11 eine zylindrische Außenform.

Auf diese zylindrische Außenform aufgesetzt ist im Kortikalbereich 13 das Sinusgewinde 12 ausgebildet, welches eine Flankentiefe von etwa 0,5 mm aufweist. Dieses Sinusgewinde 12 umfasst drei komplett abgeschlossene Gewindegänge 15, 16, 17, wobei der oberste Gewindegang 17 über den gesamten Umfang gesehen keine Steigung aufweist. Außerdem ist der oberste Gewindegang 17 so ausgeführt, dass dieser den zweiten Gewindegang 16 erreicht und somit das Sinusgewinde 12 schließt. Der oberste Gewindegang 17 ist dabei etwa 1 mm von der Oberkante des Grundkörpers 10 entfernt angeordnet.

Wie insbesondere Figur 1 b zu entnehmen ist, ist das als Schneidgewinde ausgebildete Sinusgewinde 12 symmetrisch ausgebildet, wobei die Oberflanke 18 und die Unterflanke 19 im Wesentlichen gleich, jedoch spiegelbildlich ausgebildet sind. Dabei entspricht die Außenkontur der Unter- und der Oberflanke im Wesentlichen einem Teilabschnitt einer Sinuskurve, wobei die Außenkontur des Sinusgewindes 12 so scharf ausgebildet ist, dass sich das Sinusgewinde 12 in die Kortikalis des Kieferknochens einschneidet, während das Dentalimplantat in den Kieferknochen eingedreht wird.

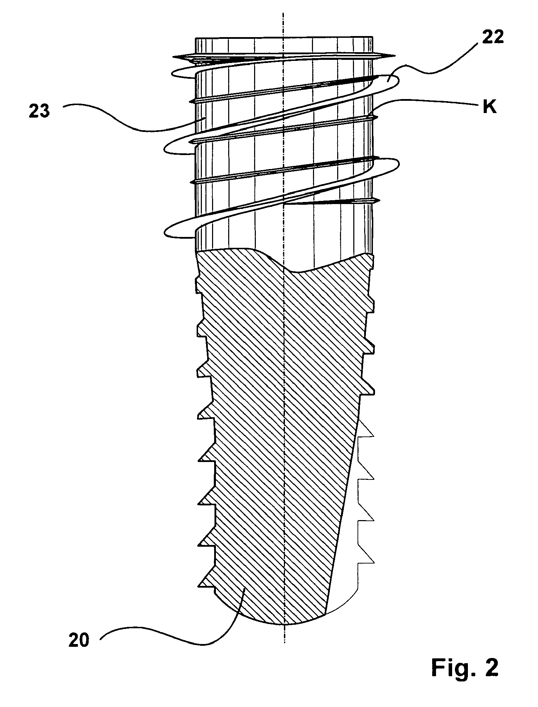

In der in Figur 2 dargestellten zweiten Ausführungsform ist zusätzlich zum Sinusgewinde 22 im Kortikalbereich 23 des Grundkörpers 20 ein Kortikalgewinde K ausgebildet, welches sich über vier Gewindegänge erstreckt. Dieses Kortikalgewinde K ist, genau so wie das Sinusgewinde 22, außen auf den Kortikalbereich 23 des Grundkörpers 22 aufgebracht. Es hat eine Flankentiefe von etwa 0,05 mm und ist als Kompressionsgewinde ausgelegt. Dieses Kortikalgewinde K endet ebenfalls etwa 1 mm unterhalb des oberen Randes des Grundkörpers 20.

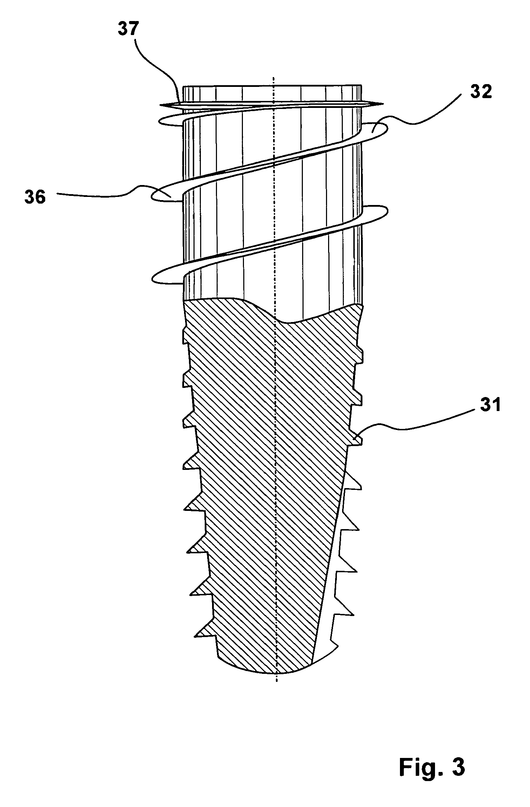

Die in Figur 3 dargestellte dritte Ausführungsform ist im Wesentlichen gleich mit den in den Figuren 1a und 1b dargestellten ersten Ausführungsform, unterscheidet sich nur in der Anzahl der Gewindegänge des Sinusgewindes 22. In dieser in Figur 3 dargestellten zweiten Ausführungsform besitzt das Sinusgewinde 22 lediglich einen Gewindegang 26 mit einer Steigung, die größer als die Steigung der Gewindegänge des Außengewindes 21 ist, und einen Gewindegang 25, der keine Steigung aufweist. Dabei ist der Gewindegang 25 (ohne Steigung) so ausgelegt, dass er so weit vor dem Gewindegang 26 endet, dass hier keine Berührung stattfindet.

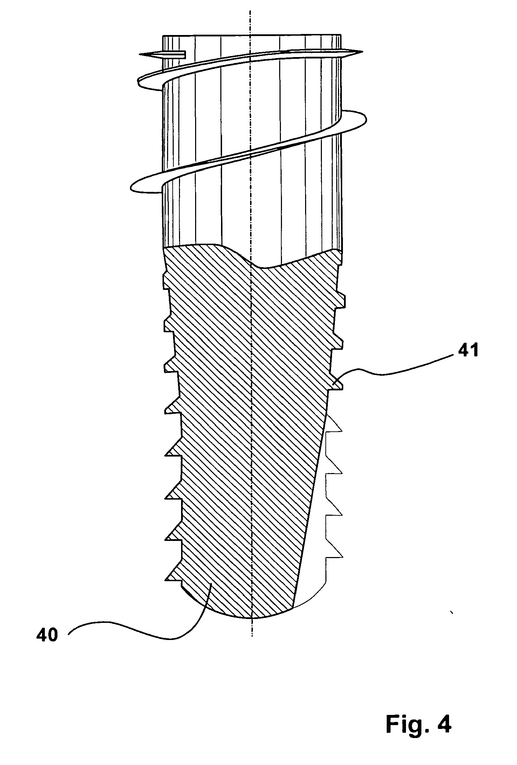

Die in Figur 4 dargestellte vierte Ausführungsform unterscheidet sich von der in den Fig. 1a und 1b dargestellten erste Ausführungsform dadurch, dass das außen auf den Grundkörper 40 aufgesetzte Außengewinde 41 eine sich konisch verjüngende Außenkontur aufweist und sich zum distalen Ende des Grundkörpers 40 hin verjüngt.

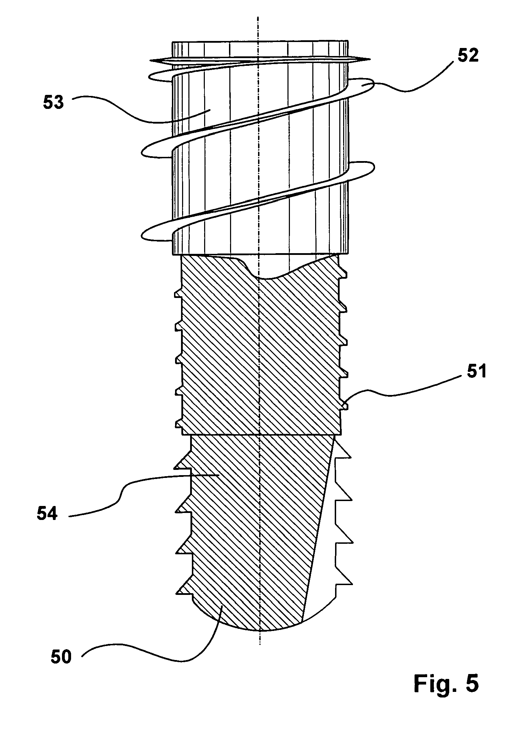

Die in Figur 5 dargestellte fünfte Ausführungsform des erfindungsgemäßen Dentalimplantates weist einen stufenförmig ausgebildeten Gewindebereich 54 auf, wobei der Durchmesser der zweiten Stufe kleiner als der Durchmesser der ersten Stufe des Gewindebereiches 54 ist.

In dieser Ausführungsform ist das Außengewinde 51 am distalen Ende des Grundkörpers 50 als Schneidgewinde ausgebildet und weist eine zylindrische Außenkontur auf. An der im mittleren Bereich des Grundkörpers 50 vorgesehenen ersten Stufe ist das Außengewinde 51 als Kompressionsgewinde ausgebildet, welches eine zylindrische Außenkontur aufweist, jedoch im Durchmesser kleiner ausgeführt ist, als der untere Teil des Außengewindes 61 und als der Durchmesser des Kortikalbereiches 53.

Das Sinusgewinde 52 und der Kortikalbereich 53 sind so ausgebildet, wie zur ersten Ausführungsform gemäß den Figuren 1a und 1 b bereits beschrieben.

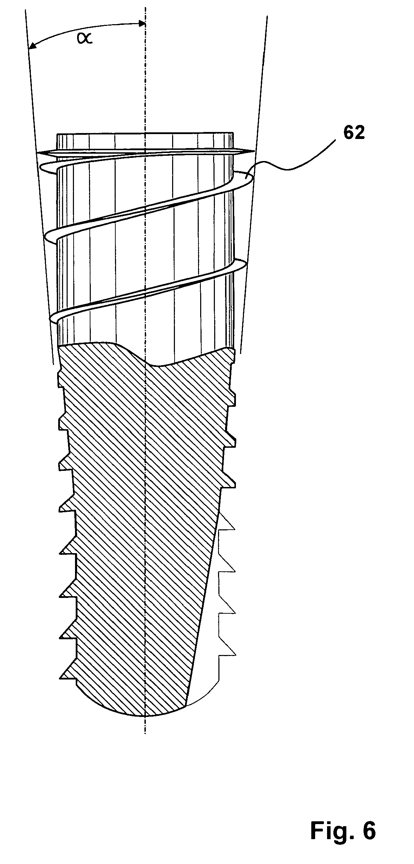

In der in Figur 6 dargestellten sechsten Ausführungsform weist das Sinusgewinde 62 eine sich konisch nach unten hin verjüngende Außenkontur auf. Dabei beträgt der Konuswinkel α etwa 5°. Im Übrigen entspricht diese sechste Ausführungsform der in den Figuren 1a und 1b beschriebenen ersten Ausführungsform.

### Bezugszeichenliste:

| | | | | | | |
|---|---|---|---|---|---|---|
| 10 | 20 | | 40 | 50 | | Grundkörper |
| 11 | | 31 | 41 | 51 | | Außengewinde |
| 12 | 22 | 32 | | 52 | 62 | Sinusgewinde |
| 13 | 23 | | | 53 | | Kortikalbereich |
| 14 | | | | 54 | | Gewindebereich |
| 15 | | | | | | Gewindegang |
| 16 | | 36 | | | | Gewindegang |
| 17 | | 37 | | | | Gewindegang |
| 18 | | | | | | Unterflanke |
| 19 | | | | | | Oberflanke |
| | K | | | | | Kortikalgewinde |
| | α | | | | | Konuswinkel |

## Patentansprüche

1. In einen menschlichen Kieferknochen endostal einschraubbares Dentalimplantat zur Aufnahme und Fixierung eines Zahnersatzes, mit einem Grundkörper (10, 20, 40, 50), welcher einen Kortikal-bereich (13, 23, 53) aufweist, an den sich ein ein Außengewinde (11, 31, 41, 51) aufweisender Gewindebereich (14, 54) anschließt, wobei der Außendurchmesser des Grundkörpers (10, 20, 40, 50) im Kortikalbereich (13, 23, 53) größer oder gleich dem Außendurchmesser des Außengewindes (11, 31, 41, 51) ist,
**dadurch gekennzeichnet,**
**dass** auf dem Grundkörper (10, 20, 40, 50) im Kortikalbereich (13, 23, 53) ein als Schneidgewinde ausgebildetes Sinusgewinde (12, 22, 32, 52, 62) vorgesehen ist, wobei zumindest ein Teil eines obersten Gewindeganges (17) des Sinusgewindes (12, 22, 32, 52, 62) keine Steigung aufweist und wobei ein freies Ende des obersten Gewindeganges (17) bis an den darunter liegenden Gewindegang (16) heranreicht.

2. Dentalimplantat nach Anspruch 1,
**dadurch gekennzeichnet,**
**dass** das Sinusgewinde (12, 22, 32, 52, 62) höchstens drei, vorzugsweise zwei, komplette Gewindegänge (15, 16, 17) besitzt.

3. Dentalimplantat nach Anspruch 1,
**dadurch gekennzeichnet,**
**dass** das Sinusgewinde (12, 22, 32, 52, 62) eine zylindrische oder sich konisch verjüngende Außenkontur besitzt.

4. Dentalimplantat nach Anspruch 1,
**dadurch gekennzeichnet,**
**dass** das Sinusgewinde (12, 22, 32, 52, 62) eine Flankentiefe von 0,4 mm bis 0,7 mm, vorzugsweise 0,5 mm aufweist.

5. Dentalimplantat nach Anspruch 1,
**dadurch gekennzeichnet,**
**dass** das Sinusgewinde (12, 22, 32, 52, 62) etwa 0,5 bis 2 mm, vorzugsweise 1 mm beabstandet vom oberen Rand des Grundkörpers (10, 20, 40, 50) beginnt.

6. Dentalimplantat nach Anspruch 1,
**dadurch gekennzeichnet,**
**dass** der Grundkörper (10, 20, 40, 50) im Kortikalbereich (13, 23, 53) zylindrisch ausgebildet ist.

7. In einen menschlichen Kieferknochen endostal einschraubbares Dentalimplantat zur Aufnahme und Fixierung eines Zahnersatzes, mit einem Grundkörper (10, 20, 40, 50), welcher einen Kortikal-bereich (13, 23, 53) aufweist, an den sich ein ein Außengewinde (11, 31, 41, 51) aufweisender Gewindebereich (14, 54) anschließt, wobei der Außendurchmesser des Grundkörpers (10, 20, 40, 50) im Kortikalbereich (13, 23, 53) größer oder gleich dem Außendurchmesser des Außengewindes (11, 31, 41, 51) ist,
**dadurch gekennzeichnet,**
**dass** auf dem Grundkörper (10, 20, 40, 50) im Kortikalbereich (13, 23, 53) ein Sinusgewinde (12, 22, 32, 52,62) vorgesehen ist.

8. Dentalimplantat nach Anspruch 7,
**dadurch gekennzeichnet,**
**dass** das Sinusgewinde (12, 22, 32, 52, 62) als Schneidgewinde ausgebildet ist.

9. Dentalimplantat nach Anspruch 7,
**dadurch gekennzeichnet,**
**dass** das Sinusgewinde (12, 22, 32, 52, 62) höchstens drei, vorzugsweise zwei, komplette Gewindegänge (15, 16, 17) besitzt.

10. Dentalimplantat nach Anspruch 9,
**dadurch gekennzeichnet,**
**dass** zumindest ein Teil des obersten Gewindeganges (17) des Sinusgewindes (12, 22, 32, 52, 62) keine Steigung aufweist.

11. Dentalimplantat nach Anspruch 10,
**dadurch gekennzeichnet,**
**dass** ein freies Ende des obersten Gewindeganges (17) bis an den darunter liegenden Gewindegang (16) heranreicht.

12. Dentalimplantat nach Anspruch 7,
**dadurch gekennzeichnet,**
**dass** das Sinusgewinde (12, 22, 32, 52, 62) eine zylindrische oder sich konisch verjüngende Außenkontur besitzt.

13. Dentalimplantat nach Anspruch 7,
**dadurch gekennzeichnet,**
**dass** das Sinusgewinde (12, 22, 32, 52, 62) eine Flankentiefe von 0,4 mm bis 0,7 mm, vorzugsweise 0,5 mm aufweist.

14. Dentalimplantat nach Anspruch 7,
**dadurch gekennzeichnet,**
**dass** das Sinusgewinde (12, 22, 32, 52, 62) etwa 0,5 bis 2 mm, vorzugsweise 1 mm beabstandet vom oberen Rand des Grundkörpers (10, 20, 40, 50) beginnt.

15. Dentalimplantat nach Anspruch 7,
**dadurch gekennzeichnet,**
**dass** der Grundkörper (10, 20, 40, 50) im Kortikalbereich (13, 23, 53) zylindrisch ausgebildet ist.
